# EUROPEAN PATENT APPLICATION

(11) **EP 1 517 511 A1**
(43) Date of publication of application: **23.03.2005**
(21) Application number: 04254948.5
(22) Date of filing: 18.08.2004
(51) Int. Cl.: H04L 29/06

(54) **A method of transmitting packet data on a network**

(30) Priority: 17.09.2003 GB 0321776
(71) Applicant: Siemens Aktiengesellschaft, 80333 München (DE)
(72) Inventor: Lindemann, Werner, Dr., 45473 Mülheim (DE); Schönfeld, Norbert, 44145 Dortmund (DE)
(74) Representative: Payne, Janice Julia

(57) **Abstract**

A method of transmitting packet data on a network, the method comprising determining a maximum segment size (MSS) required by a user for a message to be transmitted; informing a server of the determined MSS during call set-up; determining in the server a maximum transmission unit (MTU) size required for the message; comparing (25) the required MTU with an MTU available at an output interface of the network; modifying (27) the MSS in the packet to be within the available MTU size if the require MTU exceeds the available MTU; and transmitting the message.

## Description

This invention relates to a method of transmitting packet data on a network, in particular for IP networks.

Often it is not possible to contact specific Internet servers correctly via integrated services digital network (ISDN), digital subscriber lines (DSL) or even purely internet protocol (IP) routing links and this results in web pages not displaying properly or displaying incompletely or in transmission control protocol (TCP)-based services such as home banking not functioning without errors between the client and the addressed server. The cause of this is often incorrect matching of network components such as clients, routers and servers (with the server in the Internet or even the routers involved evading control by the user). This mismatching concerns the maximum transmission unit (MTU) size of the component and router interfaces involved. The corresponding error pattern, the technical cause of which is described below in greater detail, can only be rectified by competent error analysis and corresponding adaptation of the client-side MTU size by an IP expert.

Usually the MTU size is set by default on the router interfaces, clients and servers to 1500 bytes. This value identifies a maximum permissible IP packet size which the network components can process. If there is any deviation from this value, e.g. in the case of a router, the described problem may occur if a smaller MTU size is set on one of the router interfaces. This may be the case, for example in the case of Internet access via T-DSL, because the MTU size for router interfaces on T-DSL was restricted to 1492. In principle, the TCP protocol offers the facility, through server or client-side enabling of "fragmentation", for routers to fragment excessively large data packets. However, fragmentation of packets may also be prohibited at IP level. In this case a router may generate an error message to the sender stating that fragmentation is necessary. A server or client can then generate smaller packets or enable fragmentation. Sometimes, however, the server fails to react to the error message and the packets are not repeated or no error message is generated (error messages via internet control message profile (ICMP) were blocked by firewalls and the like). In this case the error pattern described above occurs.

Until now this problem could only be solved if an appropriate MTU or maximum segment size (MSS) size (= MTUSize - IPHeaderSize - TCPHeaderSize) was already set in the client. But the setting must be equivalent to the minimum of all the interfaces involved. As routing paths are usually unknown, this minimum value cannot be determined. Therefore, it is often necessary to select a relatively small size without knowing the actual values. This wastes bandwidth and performance and never ensures full functionality. Another alternative was implemented during a preliminary stage of this method by adapting the MSS size within the network address translation (NAT) algorithm in the case of Internet access. This method, however, is confined very specifically to NAT-based connections and cannot be used universally in routers.

In accordance with the present invention, a method of transmitting packet data on a network comprises determining a maximum segment size (MSS) required by a user for a message to be transmitted from a sending node; informing a server of the determined MSS during call set-up; determining in the server a maximum transmission unit (MTU) size required for the message; comparing the required MTU with an MTU available at an output interface of the network; modifying the MSS in the packet to be within the MTU size if the required MTU exceeds the available MTU; and transmitting the message.

The method of the present invention leads to improved serviceability of IP networks by enabling MSS or MTU size in routers to be automatically adapted.

Preferably, the network operates a transmission control protocol (TCP) based service.

Preferably, the user MSS is notified to the server in a first TCP packet.

An example of a method of transmitting packet data on a network in accordance with the present invention will now be described with reference to the accompanying drawings in which:
Figure 1 shows a mixed scenario with routing links where the routers service different MTU sizes;
Figure 2 is a schematic diagram of the components of a router; and,
Figure 3 is a flow diagram illustrating the process for call-set up involving the method of the present invention.

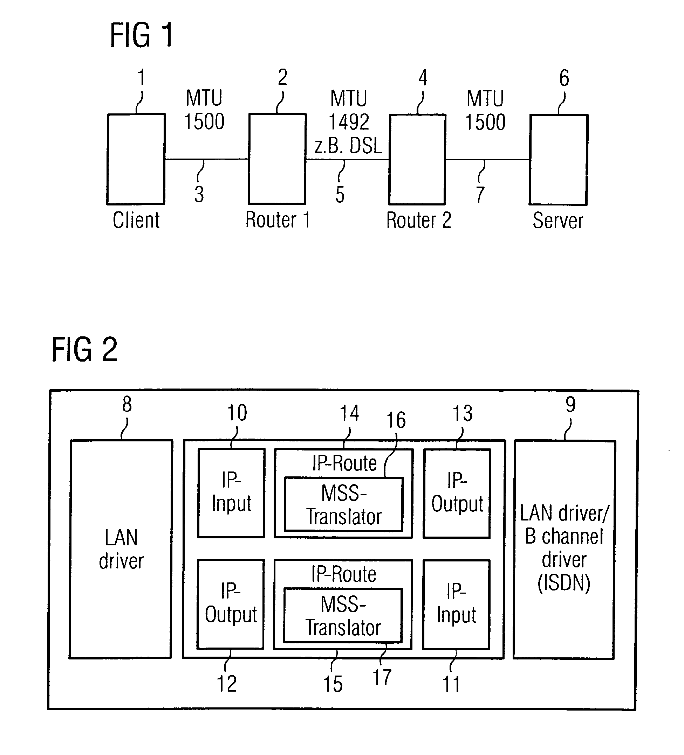

Figure 1 illustrates a mixed scenario where the router interfaces service different MTU sizes. A client 1 is connected to a first router 2 via a link 3 with an MTU size of 1500. The first router is connected to a second router 4 via a link 5 with an MTU of 1492. This second router is then linked to a server 6 via a link 7 with an MTU of 1500.

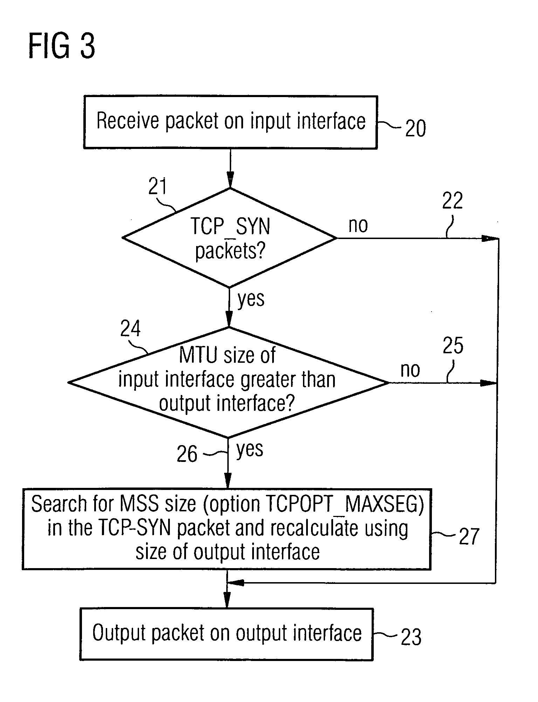

Figure 2 illustrates schematically, components of a router. In this example, a local area network (LAN) driver 8 and LAN driver or B channel driver 9 for ISDN are provided. There are respective IP inputs 10, 11 and outputs 12, 13 and IP routes 14, 15 with MSS translators 16, 17. A virtual MSS size is generated in the MSS translator 16, 17 component as part of the "IP route" functionality. Analysis and modification of the TCP protocol is a functional entity which exceeds the usual functionality of a common router, which only processes the IP-layer. The MSS size which a client wishes to use is reported to the server in the first TCP packet (TCP-SYN) during call set-up. The method makes provision for processing in each router as set out in Fig. 3.

A packet is received 20 on the input interface and is checked 21 to see if there are TCP synchronisation packets. If not 22, then the packet is sent as an output packet to the output interface 23. If there are TCP_SYN packets, then these are checked 24 to see if the MTU size of the input interface is greater than the output interface. Again, if the answer is no 25, then the packets are sent as output packets on the output interface. If the MTU size of the input interface exceeds 26 that of the output interface, then a search 27 is made for an MSS size - option TCPOPT_MAXSEG in the TCP_SYN packet - and the MSS size is recalculated using the size of the output interface. The checksum of the packet has to be recalculated. Then the packets are output on the output interface 23. Only the first packet of a message, which contains the required user MSS, needs to be processed to establish a connection and send all the subsequent packets of a message, thereby reducing the overhead as compared with prior art systems in which the entire media stream must be examined and processed for transmission.

This ensures that a client makes itself known to a server with a "virtual" MSS size and the server subsequently determines its packet size. The translation in the router which enters an MSS size which is correct (correctly configured) for the output interface for each TCP-SYN packet on an input interface, ensures that the maximum possible "virtual" MSS size is always reported to a server and the problems of lost packets described above, no longer occurs. The other network endpoints (e.g. PCs) need not be administered individually because adaptation is performed by central translation in the router. The present invention can be applied to existing network systems, since it does not require any new protocol options or changes at the sending node.

## Claims

1. A method of transmitting packet data on a network, the method comprising determining a maximum segment size (MSS) required by a user for a message to be transmitted from a sending node; informing a server of the determined MSS during call set-up; determining in the server a maximum transmission unit (MTU) size required for the message; comparing the required MTU with an MTU available at an output interface of the network; modifying the MSS in the packet to be within the available MTU size if the required MTU exceeds the available MTU; and transmitting the message.

2. A method according to claim 1, wherein the network operates a transmission control protocol (TCP) based service.

3. A method according to claim 2, wherein the user MSS is notified to the server in a first TCP packet.
